# EUROPEAN PATENT SPECIFICATION

(11) **EP 1 792 420 B1**
(45) Date of publication and mention of the grant of the patent: **11.01.2017**
(21) Application number: 05793860.7
(22) Date of filing: 07.09.2005
(51) Int. Cl.: H04B 7/04, H01Q 3/26

(54) **MEASUREMENT SUPPORT FOR A SMART ANTENNA IN A WIRELESS COMMUNICATION SYSTEM**
MESSUNTERSTÜTZUNG FÜR EINE INTELLIGENTE ANTENNE IN EINEM DRAHTLOSEN KOMMUNIKATIONSSYSTEM
MÉTROLOGIE D'ANTENNE INTELLIGENTE DE SYSTÈME DE RADIOCOMMUNICATIONS

(30) Priority: 10.09.2004 US 609212 P; 27.12.2004 US 22709
(43) Date of publication of application: 06.06.2007
(73) Proprietor: InterDigital Technology Corporation, Wilmington, DE 19809 (US)
(72) Inventor: PINHEIRO, Ana Lucia, West Chester, PA 19382 (US); CHANDRA, Arty, Manhasset Hills, New York 11040 (US); CHA, Inhyok, Yardley, PA 19067 (US); MARINIER, Paul, Brossard, Québec J4X 2J7 (CA); ROY, Vincent, Montreal, Québec H2S 2E1 (CA)
(74) Representative: Awapatent AB
(86) International application number: PCT/US2005/031655
(87) International publication number: WO 2006/031499

(56) References cited:
- EP-A2- 1 335 618
- WO-A-2004/017657
- WO-A-2004/042983
- US-A1- 2001 034 236
- US-A1- 2004 127 260
- US-B1- 6 438 389
- US-B1- 6 564 036
- US-B1- 6 721 302
- US-B1- 6 721 569
- US-B1- 6 738 020
- US-B1- 6 760 599
- US-B2- 6 778 844

## Description

### FIELD OF INVENTION

The present invention generally relates to wireless communication systems, and more particularly, to a method and apparatus for efficient measurements in utilizing a smart antenna in the wireless communication system.

### BACKGROUND

In a wireless local area network (WLAN), an access point (AP) and a station (STA) may be equipped with smart antenna features; for example, a multiple beam/directional antenna system. Both the AP and the STA need to perform measurements to decide the best beam for transmitting to or receiving from another STA. STAs with multiple beams typically perform scanning on different beams in order to estimate which is the best beam to serve them. Scanning performed by the AP and/or STAs may use either a dummy packet, a data packet, an 802.11 acknowledgement (ACK), or broadcast packets. The measurements need to be updated frequently.

At an AP, the beam switching algorithm uses packets from a STA for the antenna measurements. The best beam (based on the received packet measurements, e.g., a received power or signal to interference plus noise ratio (SINR)) is then used to transmit packets to that STA. At the STA, the current beam switching algorithm may use the data packet or beacon to decide the correct receive and transmit antenna/beam for that AP. This method for antenna measurement is not very efficient, due to the amount of time needed to obtain enough measurements to decide the correct beam for each STA.

Another problem with this beam selection method is that the beam selection, for both receive and transmit, is based on measurements made on the received packets. However, in reality, the best beam for transmission might not be the same as the best beam for reception (especially for a frequency division duplex system).

WO 2004/042983 A2 describes a method for use in a wireless communication system. A first device is configured to selectively allow a second device to operatively associate with a beam downlink transmittable to the second device using a smart antenna. The first device is configured to determine information from at least one uplink transmission from the second device through the smart antenna, and to determine if the associated second device should associate with a different downlink beam based on the information. If the associated second device should associate with a different beam, then the first device is configured to allow the second device to associate with the different beam.

### SUMMARY

A method and system for antenna selection in wireless communications as disclosed in the appended claims.

### BRIEF DESCRIPTION OF THE DRAWINGS

A more detailed understanding of the invention may be had from the following description of a preferred embodiment, given by way of example, and to be understood in conjunction with the accompanying drawings, wherein:
Figure 1 is a diagram of a measurement request packet;
Figure 2 is a diagram of a measurement packet;
Figure 3 is a diagram of a measurement report packet;
Figure 4 is a flowchart of a method for taking antenna measurements;
Figure 5 is a signal diagram of the method shown in Figure 4;
Figure 6 is a flowchart of a second method for taking antenna measurements;
Figure 7 is a signal diagram of the method shown in Figure 6;
Figure 8 is a diagram of a physical layer convergence protocol (PLCP) frame format; and
Figure 9 is a diagram of a system for communicating measurement information in accordance with the methods shown in Figures 4 and 6.

### DETAILED DESCRIPTION OF THE PREFERRED EMBODIMENTS

Hereafter, the term "station" (STA) includes, but is not limited to, a wireless transmit/receive unit, a user equipment, a fixed or mobile subscriber unit, a pager, or any other type of device capable of operating in a wireless environment. When referred to hereafter, the term "access point" (AP) includes, but is not limited to, a base station, a Node B, a site controller, or any other type of interfacing device in a wireless environment.

The present invention solves the problem of not having measurement support for smart antennas and may be implemented in an AP, a non-AP STA, or both. The present invention provides a signaling mechanism to obtain received signal strength indicator (RSSI) or SINR measurements for each transmit or receive antenna between any two stations. A mechanism to correctly update the received measurements between scanning is also provided.

The present invention uses an action frame for antenna measurements by creating a new category of action frame called "Antenna Measurement". This category of action frame includes an action field for measurement request packets, measurement response packets, and dummy measurement packets. Action frames are currently defined in the WLAN standards (i.e., 802.11k, 802.11e). The measurement packets of the present invention can also be part of a separate control packet or a management packet.

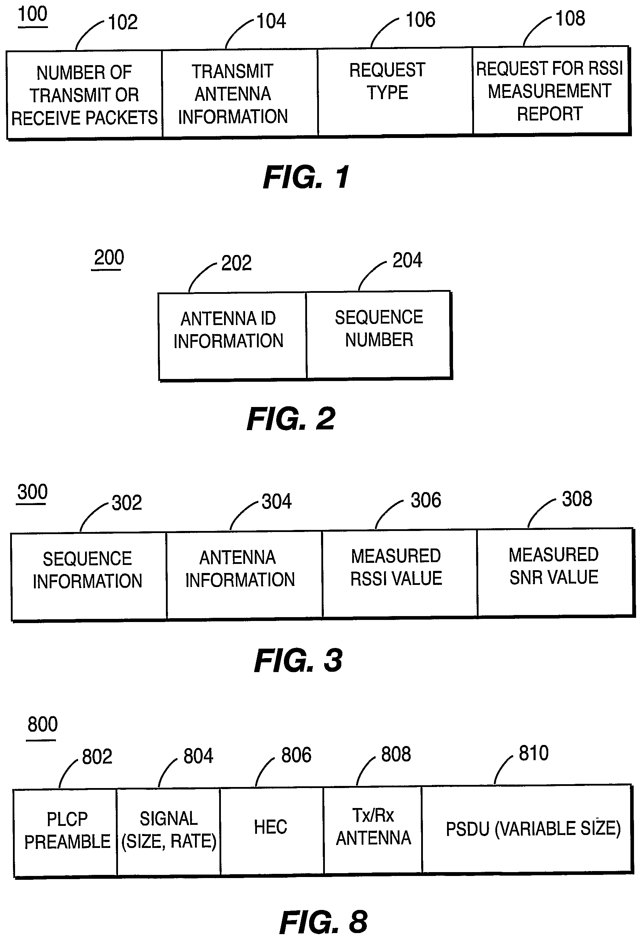

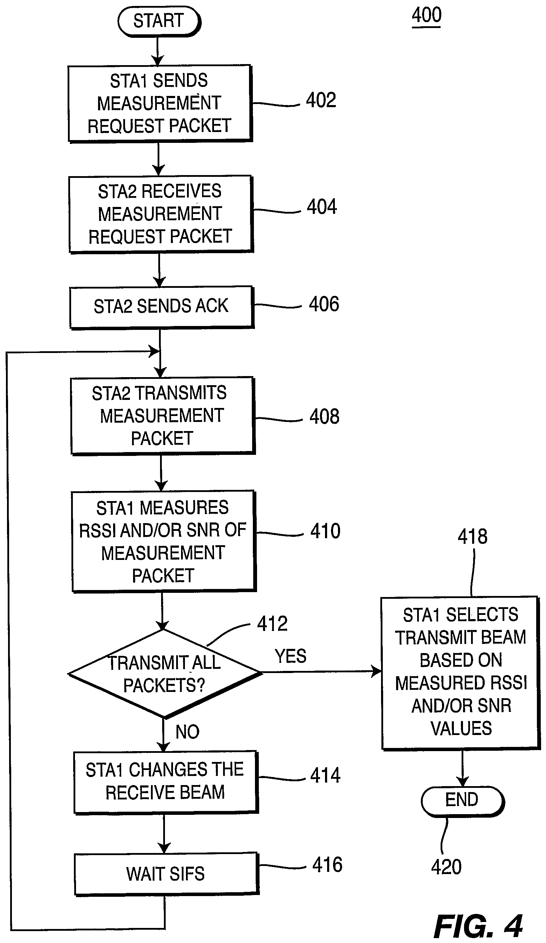

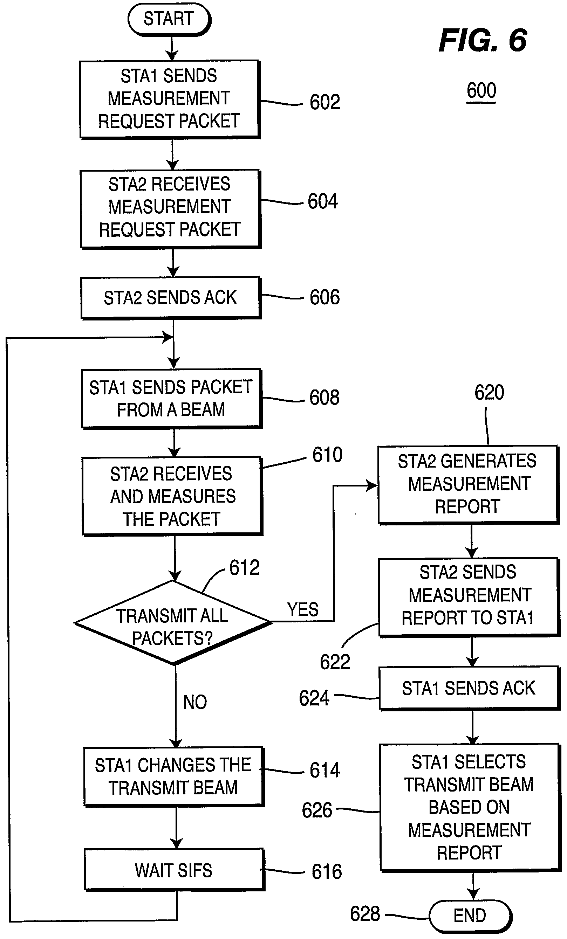

Figure 1 shows a measurement request packet 100 in accordance with the present invention. The measurement request packet 100 includes fields for the number of transmit or receive packets 102, transmit antenna information 104, request type 106, and request for measurement report 108. The number of transmit or receive packets 102 depends on parameters such as the fading environment and the time to select an antenna. In one embodiment, a preferred value is 10 packets per antenna. The transmit antenna information 104 includes the antenna beam identity or any other information that can be used to identify an antenna or set of antennas. Two possible request types 106 will be explained hereinafter in connection with Figures 4 and 6. However, it is noted that there are many possible ways of sending measurements and getting the response that can be indicated in the request type field 106. The request for measurement report field 108 includes a parameter for SNR measurement and a parameter for RSSI measurement.

Figure 2 shows a measurement packet 200 in accordance with the present invention. The measurement packet 200 includes antenna identity information 202 and sequence number of the current packet 204. The antenna identity information 202 includes the antenna beam identity or any other element that can be used to identify an antenna or set of antennas.

Figure 3 shows a measurement report packet 300 in accordance with the present invention. The measurement report packet 300 includes sequence information 302 (the sequence number of the packet), antenna information 304 (i.e., antenna identity information), the measured RSSI value 306, and the measured SNR value 308.

The measurement request and response can be initiated by the STA or the AP. The measurement request packet 100 and the measurement response packet 300 may be sent anytime while the STA is associated to the AP. The STA may be allowed to use these techniques of measuring the signal from each antenna and to each antenna before associating to the AP.

Figure 4 is a flowchart of a method 400 for measurement packet exchange between two STAs, STA1 and STA2, in accordance with a first embodiment of the present invention. The method 400 begins with STA1 sending a measurement request packet to STA2 (step 402). STA2 receives the measurement request packet (step 404) and sends an ACK to STA1 (step 406). STA2 then transmits a measurement packet to STA1 (step 408). STA1 receives the measurement packet and measures the RSSI and/or the SNR of the measurement packet (step 410). A determination is made if all of the packets, as specified in the measurement request packet, have been transmitted (step 412).

If all of the packets have not been transmitted, then STA1 changes its receive beam (step 414). STA2 waits for a short interframe space (SIFS; step 416) before transmitting the next packet (step 408). In a preferred embodiment, STA2 waits for the SIFS; however, the wait time can vary and be either more or less than the SIFS. The variable nature of the wait period relates to the length of time needed to switch antenna beams, the accuracy of the system clock, and any other implementation-specific timing issues. If all of the packets have been transmitted (step 412), then STA1 selects the transmit beam based on all of the measured RSSI and/or the SNR values (step 418) and the method terminates (step 420).

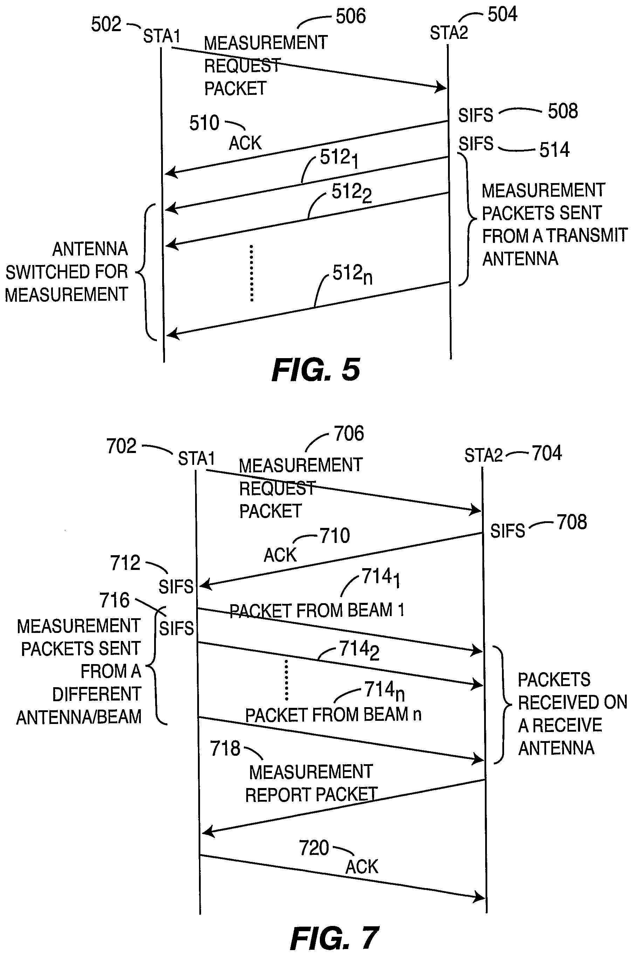

Figure 5 is a signal diagram of the method 400, showing the packet exchange between STA1 502 and STA2 504. STA1 502 sends a measurement request packet 506 to STA2 504. STA2 504 waits for a SIFS 508 before sending an ACK 510 in response to the measurement request packet 506. STA2 504 then sends multiple measurement packets 512₁ ... 512ₙ consecutively, each measurement packet 512 being separated by a SIFS 514. During the SIFS, STA1 502 changes its receive beam, such that each of the packets 512₁ ... 512ₙ is received on a different beam. STA1 502 then uses the received signal strength of each packet 512 to select the correct beam.

Figure 6 is a flowchart of a method 600 for measurement packet exchange between two STAs, STA1 and STA2, in accordance with a second embodiment of the present invention. The method 600 begins with STA1 sending a measurement request packet to STA2 (step 602). STA2 receives the measurement request packet (step 604) and sends an ACK to STA1 (step 606). STA1 sends a measurement packet from a beam (step 608). STA2 receives the measurement packet and measures the RSSI and/or the SNR of the packet (step 610). A determination is made whether all of the measurement packets specified by the measurement request packet have been transmitted (step 612). If all of the measurement packets have not been transmitted, the STA1 changes the transmit beam (step 614), waits for a SIFS (step 616), and sends a packet from the new beam (step 608). In a preferred embodiment, STA1 waits for the SIFS; however, the wait time can vary and be either more or less than the SIFS. The variable nature of the wait period relates to the length of time needed to switch antenna beams, the accuracy of the system clock, and any other implementation-specific timing issues.

If all of the measurement packets have been transmitted (step 612), then STA2 generates a measurement report based on all of the received measurement packets (step 620). STA2 sends the measurement report to STA1 (step 622) and STA1 sends an ACK to STA2 for the measurement report (step 624). STA1 selects a transmit beam based on the measurement report (step 626) and the method terminates (step 628).

Figure 7 is a signal diagram of the method 600, showing the packet exchange between STA1 702 and STA2 704. STA1 702 sends a measurement request packet 706 to STA2 704. STA2 704 waits for a SIFS 708 before sending an ACK 710 in response to the measurement request packet 706. STA1 702 waits for a SIFS 712 before sending a measurement packet 714₁... 714ₙ from a beam to STA2 704. Each measurement packet 714 is sent from a different beam, and STA1 702 waits for a SIFS 716 before sending a measurement packet 714 on another beam. STA2 704 receives the measurement packets 714 and measures each packet. After all of the measurement packets 714 have been received by STA2 704, STA2 704 generates a measurement report packet 718 and sends it to STA1 702. STA1 702 then sends an ACK to STA2 704 upon receipt of the measurement report packet 718. STA1 702 then selects a beam direction in accordance with the measurement report packet 718.

The measurement request and report information can be piggybacked on a data packet, a management packet, or a control packet. Physical layer signaling can be sent from different beams. This signaling can be sent such that it identifies different beams through some physical layer signature (such as a preamble) or beam information. These measurement signals can be sent in one packet (without waiting for a SIFS).

Passive measurement to update the received signal strength is also possible. The received signal strength from a transmitter may change based on the switched beam or the diversity techniques. A receiver may end up making inaccurate decisions on the correct beam for reception (or transmission) in the absence of any notification about the antenna usage of the transmitter node. The transmitted packet contains the beam identity or diversity method indication. This information can be used by the receiver to update the received measurement information.

The transmit antenna information is sent immediately after the physical layer convergence protocol (PLCP) header or in the medium access control (MAC) header. The information can be a pre-defined signal pattern indicating an omni-directional beam or antenna beam identity. The pattern can also be used to indicate diversity technique (if any).

Figure 8 is a diagram of a PLCP frame format 800 in accordance with the present invention. The PLCP frame 800 includes a preamble 802, a signal field 804, a header error check (HEC) 806, and a physical layer service data unit (PSDU) 810. The present invention adds a new field to the PLCP frame 800, a transmit/receive antenna identifier 808. Backward compatibility is maintained by adding transmit antenna information after the PLCP header. An additional information field may also be included in the MAC header to indicate the transmit antenna identity.

The present invention provides an efficient method to measure signal strength to/from a beam or directional antenna. The current 802.11 standards have no defined method for antenna measurement. The use of dummy packets or beacons is inefficient and time consuming. Also, it limits the use of a directional antenna in fading environments and roaming. The present invention allows a STA to use different beams for transmission and reception.

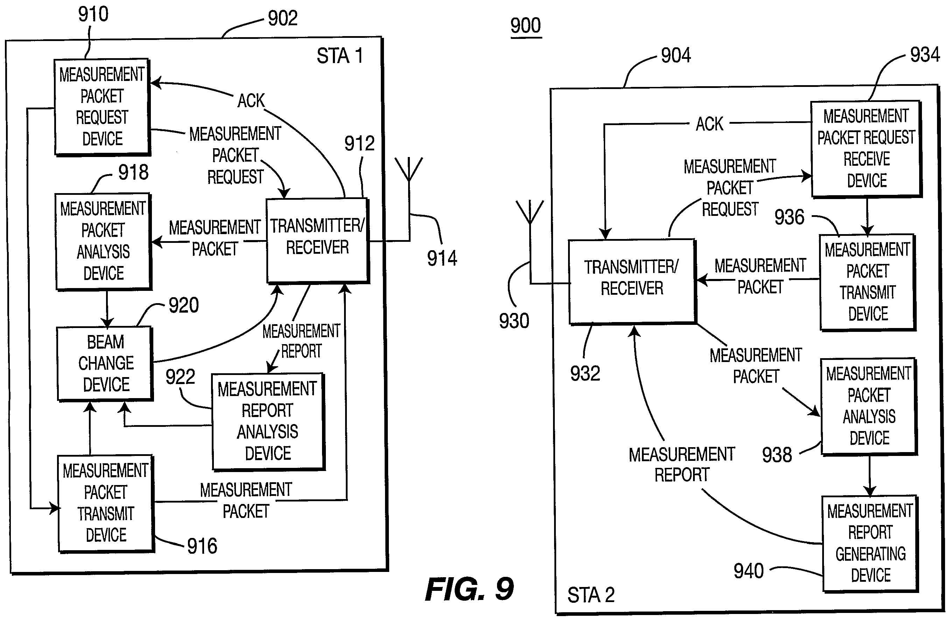

Figure 9 is a diagram of a system 900 configured to communicate measurement information in accordance with the methods 400 and 600, as described above in connection with Figures 4 and 6, respectively. The system 900 includes a first STA (STA 1) 902 and a second STA (STA 2) 904. While the system 900 is shown as two separate STAs for purposes of discussion, each STA can be constructed with all of the components shown.

The first STA 902 includes a measurement packet request device 910 connected to a transmitter/receiver 912, which is connected to an antenna 914. A measurement packet transmit device 916 is connected to the measurement packet request device 910 and the transmitter/receiver 912. A measurement packet analysis device 918 is connected to the transmitter/receiver 912. A beam change device 920 is connected to the transmitter/receiver 912, the measurement packet transmit device 916, and the measurement packet analysis device 918. A measurement report analysis device 922 is connected to the transmitter/receiver 912 and the beam change device 920.

The second STA 904 includes an antenna 930 connected to a transmitter/receiver 932. A measurement packet request receive device 934 is connected to the transmitter/receiver 932. A measurement packet transmit device 936 is connected to the transmitter/receiver 932 and the measurement packet request receive device 934. A measurement packet analysis device 938 is connected to the transmitter/receiver 932. A measurement report generating device 940 is connected to the transmitter/receiver 932 and the measurement packet analysis device 938.

When implementing the method 400, the system 900 is configured to operate as follows. The measurement packet request device 910 generates a measurement packet request, which is sent to transmitter/receiver 912 for transmission to the second STA 904. The transmitter/receiver 932 receives the measurement packet request and forwards it to the measurement packet request receive device 934. The measurement packet request receive device 934 generates an ACK which is sent to the first STA 902.

After sending the ACK, the measurement packet request receive device 934 signals the measurement packet transmit device 936 to begin sending measurement packets to the first STA 902. When measurement packets are received at the first STA 902, the transmitter/receiver 912 forwards the measurement packets to the measurement packet analysis device 918, where the RSSI and/or SNR of the measurement packet is measured. If all of the requested measurement packets have not been received, the measurement packet analysis device 918 signals the beam change device 920 to change the receive beam of the first STA 902 to receive additional measurement packets.

If all of the requested measurement packets have been received, the measurement packet analysis device selects an appropriate transmit beam based on the previously measured values and then signals a selected transmit beam to the beam change device 920.

When implementing the method 600, the system 900 is configured to operate as follows. The measurement packet request device 910 generates a measurement packet request, which is sent to transmitter/receiver 912 for transmission to the second STA 904. The transmitter/receiver 932 receives the measurement packet request and forwards it to the measurement packet request receive device 934. The measurement packet request receive device 934 generates an ACK which is sent to the first STA 902.

Upon receipt of the ACK, the measurement packet request device 910 signals the measurement packet transmit device 916 to begin transmitting measurement packets to the second STA 904. Upon receipt of a measurement packet, the transmitter/receiver 932 forwards the measurement packet to the measurement packet analysis device 938 where the packet is measured. If all of the requested measurement packets have not been transmitted, the measurement packet transmit device 916 signals the beam change device 918 to change the transmit beam prior to sending the next measurement packet.

If all of the requested measurement packets have been transmitted, then the measurement report generating device 940 generates a measurement report which is sent to the first STA 902. The measurement report is forwarded to the measurement report analysis device 922, which selects a transmit beam for the first STA 902 based on the measurement report. The measurement report analysis device 922 then signals the selected beam to the beam change device 920 to change the transmit beam for the first STA 902.

### Embodiments

1. A method for taking measurements with a smart antenna in a wireless communication system having a plurality of STAs, including the steps of: sending a measurement request from a first STA to a second STA; transmitting at least two measurement packets from the second STA to the first STA, either consecutively or simultaneously; receiving each measurement packet at the first STA using a different antenna beam; performing measurements at the first STA on each measurement packet; and selecting an antenna beam direction at the first STA based on the measurement results.
2. The method according to embodiment 1, wherein the measurement request includes a number of measurement packets to transmit.
3. The method according to any of the preceding embodiments, wherein the transmitting step includes waiting for an interframe space between transmitting measurement packets.
4. The method according to embodiment 3, wherein the interframe space is one of a short interframe space (SIFS), less than one SIFS, and more than one SIFS.
5. The method according to any of the preceding embodiments, wherein the performing step includes measuring a received signal strength indicator (RSSI) of each measurement packet.
6. The method according to embodiment 5, wherein the selecting step includes selecting a transmit beam direction based on the measured RSSI values.
7. The method according to any of embodiments 1-4, wherein the performing step includes measuring a signal to noise ratio (SNR) of each measurement packet.
8. The method according to embodiment 7, wherein the selecting step includes selecting a transmit beam direction based on the measured SNR values.
9. The method according to any of embodiments 1-4, wherein the performing step includes measuring a received signal strength indicator (RSSI) and a signal to noise ratio (SNR) of each measurement packet.
10. The method according to embodiment 9, wherein the selecting step includes selecting a transmit beam direction based on the measured RSSI and SNR values.
11. The method according to any of the preceding embodiments, further including the step of sending an acknowledgement from the second STA to the first STA upon receipt of the measurement request.
12. The method according to any of the preceding embodiments, further including the step of changing the receive beam of the antenna at the first STA to a different beam after a measurement packet has been received, whereby the antenna at the first STA uses a different beam to receive the next measurement packet.
13. A method for taking measurements with a smart antenna in a wireless communication system having a plurality of STAs, including the steps of: sending a measurement request from a first STA to a second STA; transmitting at least two measurement packets from the first STA to the second STA either consecutively or simultaneously, each measurement packet being transmitted using a different antenna beam; receiving each measurement packet at the second STA; performing measurements at the second STA on each measurement packet; generating a measurement report at the second STA based on the measurement results; sending the measurement report from the second STA to the first STA; and selecting an antenna beam direction at the first STA based on the measurement report.
14. The method according to embodiment 13, wherein the measurement request includes a number of measurement packets to transmit.
15. The method according to any of the preceding embodiments, wherein the transmitting step includes waiting for an interframe space between transmitting measurement packets.
16. The method according to embodiment 15, wherein the interframe space is one of a short interframe space (SIFS), less than one SIFS, and more than one SIFS.
17. The method according to any of the preceding embodiments, further including the step of sending an acknowledgement from the second STA to the first STA upon receipt of the measurement request.
18. The method according to any of the preceding embodiments, further including the step of changing the transmit beam of the antenna at the first STA to a different beam after a measurement packet has been transmitted, whereby the antenna at the first STA uses a different beam to transmit the next measurement packet.
19. The method according to any of the preceding embodiments, further including the step of sending an acknowledgement from the first STA to the second STA upon receipt of the measurement report.
20. A system for taking measurements with a smart antenna in a wireless communication system, including a first STA and a second STA. The first STA includes a first transmitter/receiver; a first antenna, connected to the first transmitter/receiver; a measurement packet request device, connected to the first transmitter/receiver; a measurement packet analysis device, connected to the first transmitter/receiver; and a beam change device, connected to the first transmitter/receiver and the measurement packet analysis device. The second STA includes a second transmitter/receiver; a second antenna, connected to the second transmitter/receiver; a measurement packet request receive device, connected to the second transmitter/receiver; and a measurement packet transmit device, connected to the second transmitter/receiver and the measurement packet request receive device.
21. The system according to embodiment 20, wherein the measurement packet request device is configured to send a measurement packet request and to receive an acknowledgement from the second station that the measurement packet request was received.
22. The system according to embodiments 20 or 21, wherein the measurement packet analysis device is configured to receive measurement packets from the second station, to measure the measurement packets, and to signal a selected beam to the beam change device.
23. The system according to any of embodiments 20-22, wherein the measurement packet request receive device is configured to receive a measurement packet request from the first station, to send an acknowledgement to the first station that the measurement packet request was received, and to signal the measurement packet transmit device to being sending measurement packets to the first station.
24. The system according to any of embodiments 20-23, wherein the measurement packet transmit device is configured to send measurement packets to the first station.
25. A system for taking measurements with a smart antenna in a wireless communication system, including a first STA and a second STA. The first STA includes a first transmitter/receiver; a first antenna, connected to the first transmitter/receiver; a measurement packet request device, connected to the first transmitter/receiver; a measurement packet transmit device, connected to the first transmitter/receiver and the measurement packet request device; a beam change device, connected to the first transmitter/receiver and the measurement packet transmit device; and a measurement report analysis device, connected to the first transmitter/receiver and the beam change device. The second STA includes a second transmitter/receiver; a second antenna, connected to the second transmitter/receiver; a measurement packet request receive device, connected to the second transmitter/receiver; a measurement packet analysis device, connected to the second transmitter/receiver; and a measurement report generating device, connected to the second transmitter/receiver and the measurement packet analysis device.
26. The system according to embodiment 25, wherein the measurement packet request device is configured to send a measurement packet request to the second station and to receive an acknowledgement from the second station that the measurement packet request was received.
27. The system according to embodiments 25 or 26, wherein the measurement packet transmit device is configured to send measurement packets to the second station.
28. The system according to any of embodiments 25-27, wherein the measurement packet transmit device is configured to signal the beam change device to change a transmit beam of the first station.
29. The system according to any of embodiments 25-28, wherein the measurement report analysis device is configured to receive a measurement report from the second station, to select a transmit beam for the first station based on the measurement report, and to signal the beam change device to change the transmit beam of the first station to the selected beam.
30. The system according to any of embodiments 25-29, wherein the measurement packet request receive device is configured to receive a measurement packet request from the first station and to send an acknowledgement to the first station that the measurement packet request was received.
31. The system according to any of embodiments 25-30, wherein the measurement packet analysis device is configured to receive measurement packets from the first station, to measure the measurement packets, and to forward the measurements to the measurement report generating device.
32. The system according to any of embodiments 25-31, wherein the measurement report generating device is configured to receive measurements from the measurement packet analysis device and to create a measurement report to be sent to the first station.

While the present invention has been described in terms of a WLAN, the principles of the present invention are equally applicable to any type of wireless communication system. Although the features and elements of the present invention are described in the preferred embodiments in particular combinations, each feature or element can be used alone (without the other features and elements of the preferred embodiments) or in various combinations with or without other features and elements of the present invention.

## Claims

1. A method for use in a first station, STA, for antenna selection in wireless communications, the method **characterized by**:
transmitting a measurement request packet (402; 506) from the first STA to a second STA, wherein the measurement request packet includes an indication of a requested number of measurement packets;
receiving (408; 512₁, 512₂), at the first STA, the requested number of measurement packets from the second STA consecutively, wherein the first STA uses a different receive beam for each packet;
measuring (410), at the first STA, each of the received measurement packets; and
selecting (418), at the first STA, a beam based on the measuring of each of the received measurement packets.

2. The method according to claim 1, wherein receiving the requested number of measurement packets includes waiting for an interframe space between measurements packets.

3. The method according to claim 2, wherein the interframe space is a short interframe space, SIFS.

4. The method according to claim 1, wherein measuring each of the received measurement packets includes measuring at least one of a received signal strength indicator, RSSI, or a signal to noise ratio, SNR, of each measurement packet.

5. The method according to claim 4, wherein selecting the beam includes selecting the beam based on at least one of the measured RSSI or SNR values.

6. The method according to claim 1, further comprising receiving an acknowledgement from the second STA, wherein the acknowledgement is associated with the measurement request packet.

7. The method of claim 6, wherein the ACK is received after a short interframe space, SIFS.

8. The method of claim 1, wherein the measurement request packet comprises a field that provides the indication of the requested number of measurement packets.

9. The method of claim 1, wherein each measurement packet includes sequence information.

10. A first station, STA, **characterized by**:
a transmitter (912) configured to send a measurement request packet (402; 506) to a second STA, wherein the measurement request packet includes an indication of a requested number of measurement packets;
an antenna (914) for receiving, at the first STA, the requested number of measurement packets from the second STA consecutively, wherein the first STA is configured to use a different receive beam for each measurement packet;
a processor (918) configured to measure each of the received measurement packets; and
a selector (920) configured to select a beam based on the measurement of each of the received measurement packets.

11. The first STA of claim 10, wherein each respective measurement packet is received after a respective interframe space.

12. The first STA of claim 11, wherein the interframe space is a short interframe space, SIFS.

13. The first STA of claim 10, wherein the measurement request packet comprises a field that provides the indication of the requested number of measurement packets.

14. The first STA of claim 10, wherein each measurement packet includes sequence information.

15. The first STA of claim 10, wherein the processor is further configured to receive an ACK from the second STA, wherein the ACK is associated with the measurement request packet.

16. The first STA of claim 15, wherein the ACK is received after a short interframe space, SIFS.

## Patentansprüche

1. Verfahren zur Verwendung in einer ersten Station (STA) zur Antennenauswahl in der drahtlosen Kommunikation, wobei das Verfahren **gekennzeichnet ist durch**:
Senden eines Messungsanforderungspaketes (402; 506) von der ersten STA zu einer zweiten STA, wobei das Messungsanforderungspaket einen Hinweis auf eine angeforderte Anzahl von Messungspaketen enthält;
aufeinanderfolgendes Empfangen (408; 512₁, 512₂), in der ersten STA, der angeforderten Anzahl von Messungspaketen von der zweiten STA, wobei die erste STA für jedes Paket einen anderen Empfangsstrahl verwendet;
Messen (410), in der ersten STA, jedes der empfangenen Messungspakete; und
Auswählen (418), in der ersten STA, eines Strahls auf der Basis der Messung jedes der empfangenen Messungspakete.

2. Verfahren nach Anspruch 1, wobei das Empfangen der angeforderten Anzahl von Messungspaketen das Warten auf einen Interframe-Raum zwischen Messungspaketen enthält.

3. Verfahren nach Anspruch 2, wobei der Interframe-Raum ein kurzer Interframe-Raum (Interframe Space, SIFS) ist.

4. Verfahren nach Anspruch 1, wobei das Messen jedes der empfangenen Messungspakete das Messen eines Empfangssignalstärkeindikators (Received Signal Strenght Indicator, RSSI) und/oder eines Signal-Rausch-Verhältnisses (Signal-to-Noise Ratio, SNR) jedes Messungspaketes enthält.

5. Verfahren nach Anspruch 4, wobei das Auswählen des Strahls das Auswählen des Strahls auf der Basis des gemessenen RSSI- und/oder SNR-Wertes enthält.

6. Verfahren nach Anspruch 1, das des Weiteren das Empfangen einer Bestätigung von der zweiten STA umfasst, wobei die Bestätigung mit dem Messungsanforderungspaket verknüpft ist.

7. Verfahren nach Anspruch 6, wobei die ACK nach einem kurzen Interframe-Raum (Interframe Space, SIFS) empfangen wird.

8. Verfahren nach Anspruch 1, wobei das Messungsanforderungspaket ein Feld umfasst, das den Hinweis auf die angeforderte Anzahl von Messungspaketen enthält.

9. Verfahren nach Anspruch 1, wobei jedes Messungspaket Sequenzinformationen enthält.

10. Erste Station (STA), **gekennzeichnet durch**:
einen Sender (912), der dafür konfiguriert ist, ein Messungsanforderungspaket (402; 506) zu einer zweiten STA zu senden, wobei das Messungsanforderungspaket einen Hinweis auf eine angeforderte Anzahl von Messungspaketen enthält;
eine Antenne (914) zum aufeinanderfolgenden Empfangen, in der ersten STA, der angeforderten Anzahl von Messungspaketen von der zweiten STA, wobei die erste STA dafür konfiguriert ist, für jedes Messungspaket einen anderen Empfangsstrahl zu verwenden;
einen Prozessor (918), der dafür konfiguriert ist, jedes der empfangenen Messungspakete zu messen; und
einen Selektor (920), der dafür konfiguriert ist, einen Strahl auf der Basis der Messung jedes der empfangenen Messungspakete auszuwählen.

11. Erste STA nach Anspruch 10, wobei jedes jeweilige Messungspaket nach einem jeweiligen Interframe-Raum empfangen wird.

12. Erste STA nach Anspruch 11, wobei der Interframe-Raum ein kurzer Interframe-Raum (Interframe Space, SIFS) ist.

13. Erste STA nach Anspruch 10, wobei das Messungsanforderungspaket ein Feld umfasst, das den Hinweis auf die angeforderte Anzahl von Messungspaketen enthält.

14. Erste STA nach Anspruch 10, wobei jedes Messungspaket Sequenzinformationen enthält.

15. Erste STA nach Anspruch 10, wobei der Prozessor des Weiteren dafür konfiguriert ist, eine ACK von der zweiten STA zu empfangen, wobei die ACK mit dem Messungsanforderungspaket verknüpft ist.

16. Erste STA nach Anspruch 15, wobei die ACK nach einem kurzen Interframe-Raum (Interframe Space, SIFS) empfangen wird.

## Revendications

1. Procédé destiné à être utilisé dans une première station, STA, pour une sélection d'antenne dans des communications sans fil, le procédé étant **caractérisé par** :
la transmission d'un paquet de demande de mesure (402 ; 506) de la première STA à une deuxième STA, dans lequel le paquet de demande de mesure comprend une indication d'un nombre demandé de paquets de mesure ;
la réception (408 ; 512₁, 512₂), à la première STA, du nombre demandé de paquets de mesure consécutivement en provenance de la deuxième STA, dans lequel la première STA utilise un faisceau de réception différent pour chaque paquet ;
la mesure (410), à la première STA, de chacun des paquets de mesure reçus ; et
la sélection (418), à la première STA, d'un faisceau sur la base de la mesure de chacun des paquets de mesure reçus.

2. Procédé selon la revendication 1, dans lequel la réception du nombre demandé de paquets de mesure comprend l'attente d'un espace inter-trame entre des paquets de mesure.

3. Procédé selon la revendication 2, dans lequel l'espace inter-trame est un espace inter-trame court, SIFS.

4. Procédé selon la revendication 1, dans lequel la mesure de chacun des paquets de mesure reçus comprend la mesure d'au moins l'un d'un indicateur de force de signal reçu, RSSI, ou d'un rapport de signal sur bruit, SNR, de chaque paquet de mesure.

5. Procédé selon la revendication 4, dans lequel la sélection du faisceau comprend la sélection du faisceau sur la base d'au moins l'une des valeurs RSSI ou SNR mesurées.

6. Procédé selon la revendication 1, comprenant en outre la réception d'un accusé de réception en provenance de la deuxième STA, dans lequel l'accusé de réception est associé au paquet de demande de mesure.

7. Procédé selon la revendication 6, dans lequel l'ACK est reçu après un espace inter-trame court, SIFS.

8. Procédé selon la revendication 1, dans lequel le paquet de demande de mesure comprend un champ fournissant l'indication du nombre demandé de paquets de mesure.

9. Procédé selon la revendication 1, dans lequel chaque paquet de mesure comprend des informations de séquence.

10. Première station, STA, **caractérisée par** :
un émetteur (912) configuré pour effectuer l'envoi d'un paquet de demande de mesure (402 ; 506) à une deuxième STA, dans laquelle le paquet de demande de mesure comprend une indication d'un nombre demandé de paquets de mesure ;
une antenne (914) pour effectuer la réception, à la première STA, du nombre demandé de paquets de mesure consécutivement en provenance de la deuxième STA, dans laquelle la première STA est configurée pour effectuer l'utilisation d'un faisceau de réception différent pour chaque paquet de mesure ;
un processeur (918) configuré pour effectuer la mesure de chacun des paquets de mesure reçus ; et
un sélectionneur (920) configuré pour effectuer la sélection d'un faisceau sur la base de la mesure de chacun des paquets de mesure reçus.

11. Première STA selon la revendication 10, dans laquelle chaque paquet de mesure respectif est reçu après un espace inter-trame respectif.

12. Première STA selon la revendication 11, dans laquelle l'espace inter-trame est un espace inter-trame court, SIFS.

13. Première STA selon la revendication 10, dans laquelle le paquet de demande de mesure comprend un champ fournissant l'indication du nombre demandé de paquets de mesure.

14. Première STA selon la revendication 10, dans laquelle chaque paquet de mesure comprend des informations de séquence.

15. Première STA selon la revendication 10, dans laquelle le processeur est en outre configuré pour effectuer la réception d'un ACK en provenance de la deuxième STA, dans laquelle l'ACK est associé au paquet de demande de mesure.

16. Première STA selon la revendication 15, dans laquelle l'ACK est reçu après un espace inter-trame court, SIFS.
